# EUROPÄISCHE PATENTSCHRIFT

(11) **EP 1 078 944 B1**
(45) Veröffentlichungstag und Bekanntmachung des Hinweises auf die Patenterteilung: **09.04.2003**
(21) Anmeldenummer: 00113998.9
(22) Anmeldetag: 01.07.2000
(51) Int. Cl.: C08G 18/79

(54) **Verfahren zur Herstellung von thermoplastischen Polyurethan Fasern**
Process for manufacturing thermoplastic polyurethane fibres
Procédé de preparation de fibres de polyurethane thermoplastique

(30) Priorität: 12.08.1999 DE 19938300
(43) Veröffentlichungstag der Anmeldung: 28.02.2001
(73) Patentinhaber: BASF AKTIENGESELLSCHAFT, 67056 Ludwigshafen (DE)
(72) Erfinder: Leberfinger, Marcus, 49124 Georgsmarienhütte (DE); Scholz, Günter, Dr., 49448 Lemförde (DE); Genz, Manfred, Dr., 1190 Bruessel (BE)

(56) Entgegenhaltungen:
- EP-A- 0 013 487
- EP-A- 0 308 710
- US-A- 4 306 052

## Beschreibung

Die Erfindung betrifft Verfahren zur Herstellung von thermoplatischen Polyurethan-Fasern durch Umsetzung von (a) Isocyanaten mit (b) gegenüber Isocyanaten reaktiven Verbindungen mit einer mittleren Funktionalität von 1,8 bis 2,5 und einem Molekulargewicht von 500 bis 8000 g/mol und gegebenenfalls (c) Kettenverlängerungmitteln mit einem Molekulargewicht von kleiner 500 g/mol, (d) Katalysatoren und/oder (e) üblichen Hilfsund/oder Zusatzstoffen sowie thermoplastische Polyurethane, die durch ein solches Verfahren erhältlich sind.

Die Herstellung von thermoplastischen Polyurethanen, die im Folgenden auch als TPU abgekürzt werden, ist allgemein bekannt.

TPU sind teilkristalline Werkstoffe und gehören zu der Klasse der thermoplastischen Elastomere. Sie zeichnen sich unter anderem durch gute Festigkeiten, Abriebe, Weiterreißfestigkeiten und Chemikalienbeständigkeiten aus und können in nahezu beliebiger Härte durch geeignete Rohstoffzusammensetzungen hergestellt werden.

Elastomerfasern auf der Basis von TPU werden zu über 80 % nach dem Trockenspinnverfahren, d.h. unter Einsatz von Lösungsmitteln auf der Basis der entsprechenden Polyurethanharnstoffen hergestellt. Polyurethanharnstoffe weisen den Vorteil auf, daß sie zu temperaturstabilen Elastomerfasern mit gutem Hystereseverhalten führen. Sie besitzen allerdings den Nachteil, daß eine zersetzungsfreie thermoplastische Verarbeitung beispielsweise durch ein Schmelzspinnverfahren nicht möglich ist, damit auf ein Lösungsmittel nicht verzichtet werden kann und somit das aufwendigere und teure Lösungsspinnverfahren (Trocken- oder Naßspinnverfahren) angewendet werden muß.

Beim Schmelzspinnverfahren werden zwar Elastomerfasern erhalten, die das Niveau der lösungsmittelversponnenen Elasatomerfasern bezüglich der Temperaturstabilität und des Hystereseverhaltens, insbesondere im Hinblick der Restdehnung nicht ganz erreichen, jedoch besteht mit dem Schmelzspinnverfahren die Möglichkeit, auf ein lösungsmittelfreies und somit sehr wirtschaftliches Verfahren zurückgreifen zu können.

Der vorliegenden Erfindung lag deshalb die Aufgabe zugrunde, ein Verfahren zur Herstellung von thermoplastischen Polyurethan-Fasern durch Umsetzung von (a) Isocyanaten mit (b) gegenüber Isocyanaten reaktiven Verbindungen mit einer mittleren Funktionalität von 1,8 bis 2,5 und einem Molekulargewicht von 500 bis 8000 g/mol und gegebenenfalls (c) Kettenverlängerungsmitteln mit einem Molekulargewicht von kleiner 500 g/mol, (d) Katalysatoren und/oder (e) üblichen Hilfs- und/oder Zusatzstoffen zu entwickeln, durch welches ein TPU mit einer verbesserten Temperaturstabilität zugänglich wird, welches gleichzeitig ein verbessertes Hystereseverhalten aufweist und in Schmelzspinnanlagen zu Elastomerfasern verarbeitet werden kann.

Diese Aufgabe konnte erfindungsgemäß dadurch gelöst werden, daß man mindestens 3-funktionelle Isocyanate (a1) enthaltend Urethoniminstrukturen einsetzt. Gleichzeitig konnten hierbei TPU erhalten werden, die deutlich verbesserte Druckverformungsreste aufweisen.

Die erfindungsgemäßen Isocyanate (a1) enthaltend Urethoniminstrukturen weisen mindestens 3, bevorzugt 3 bis 6 Isocyanatgruppen auf, basieren bevorzugt auf MDI und können durch allgemein bekannte Cycloadditionen (Khorana, Chem. Reviews, 53, (1953), 145; Farrissey, Ricciardi, Sayigh; J. Org. Chem; 33(5), (1968), 1913)) von Isocyanaten mit Carbodiimidstrukturen gemäß der folgenden Formel I erhalten werden, wobei sich R, R' und R'', die gleich oder verschieden sein können, aus dem Rest des entsprechenden Isocyanates, die beispielhaft an späterer Stelle aufgeführt sind, ergeben.

Formel I (Cycloaddition zum Urethonimin): 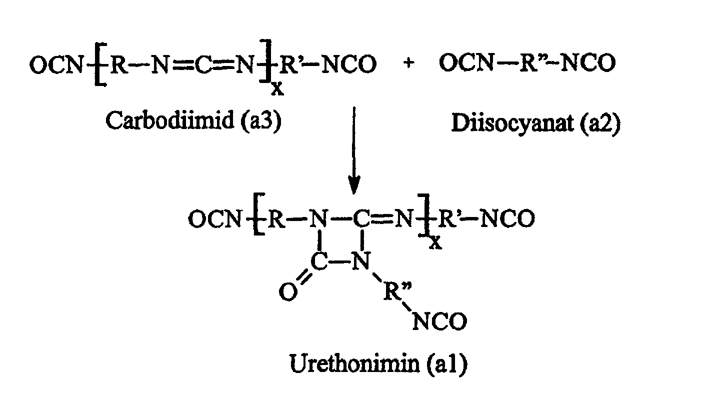 mit x = mindestens 1, besonders bevorzugt 1 bis 6

Die in der Formel I dargestellten Isocyanate enthaltend Carbodiimidstrukturen können nach allgemein bekannten Verfahren hergestellt werden und sind zudem kommerziell erhältlich.

Bevorzugt wird somit von Isocyanaten mit 2 bis 3, besonders bevorzugt mit 2 Isocyanatgruppen ausgegangen und die entsprechenden Carbodiimide hergestellt. Die höhere Funktionalität wird durch die anschließende Umsetzung des Carbodiimids mit einem weiteren Isocyanatmolekül zum besagten Urethonimin erzeugt.

Üblicherweise werden somit reine Diisocyanat (a2), die keine Carbodiimid- und Urethoniminstrukturen aufweisen, Isocyanate enthaltend Carbodiimidstrukturen (a3) und Isocyanate (a1) enthaltend Urethonimine in dem erfindungsgemäßen Verfahren eingesetzt.

Bevorzugt sind demnach Verfahren, in denen man zusätzlich zu (a1) difunktionelle Isocyanate (a2), beispielsweise die an späterer Stelle beschriebenen, einsetzt. Besonders bevorzugt setzt man zusätzlich zu (a1) und (a2) difunktionelle Isocyanate (a3) enthaltend Carbodiimidstrukturen ein. Diese difunktionellen Isocyanate (a3) enthaltend Carbodiimidstrukturen können die in der Formel I dargestellte Formel aufweisen und auf den an späterer Stelle beschriebenen Isocyanaten basieren.

Bevorzugt werden (a1), (a2) und (a3) in solchen Verhältnissen zueinander eingesetzt, daß die Gesamtfunktionalität der Isocyanate, d.h. die mittlere Anzahl der Isocyanatgruppen pro Molekül, gemittelt über alle Moleküle, die Isocyanatgruppen aufweisen, d.h. insbesondere (a1), (a2) und (a3), soweit alle drei Komponenten eingesetzt werden, 2,01 bis 5, bevorzugt 2,1 bis 5, besonders bevorzugt 2,1 bis 3 beträgt. Durch Mischung mit zusätzlichem monomerem Diisocyanat, besonders bevorzugt MDI, kann die Gesamtfunktionalität aber auch deutlich reduziert werden, beispielsweise auf 2,01 bis 2,1.

Durch diese höhere Funktionalität, d.h. eine Funktionalität, die über der üblichen Funktionalität von 2 von Diisocyanaten liegt, können in TPU Vernetzungen erzeugt werden, die bei der thermoplastischen Verarbeitung aufspaltbar sind und danach im Fertigprodukt wieder rekombinieren. Durch das höhere Molekulargewicht, erkennbar unter anderem an den höheren Lösungsviskositäten und den Vernetzungen, werden deutliche Verbesserungen in der Temperaturstabilität, im Druckverformungsrest und im Hystereseverhalten erzielt. Durch die Reversibilität der Vernetzungen treten bei der thermoplastischen Verarbeitung, beispielsweise im Spinnprozeß, keine Probleme auf.

Als Isocyanate (a2), beziehungsweise als Isocyanate, auf denen (a1) und/oder (a3) basieren, können erfindungsgemäß aliphatische, cycloaliphatische, araliphatische und/oder aromatische Diisocyanate eingesetzt werden, bevorzugt aromatische Isocyanate. Im einzelnen seien beispielhaft die folgenden Isocyanate genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethani diisocyanat sowie die entsprechenden Isomerengemische, 2,4-und/oder 4,4-Di(isocyanatomethyl)-cyclohexan, 2,4- und/oder 4,4-Di(isocyanatoethyl)cyclohexan, aromatische Diisocyanate, wie 2,4-Toluylen-diisocyanat, Gemische aus 2,4- und 2,6-Toluylen-diisocyanat, 4,4'-, 2,4'- und/oder 2,2'-Diphenylmethan-diisocyanat (in dieser Schrift als MDI bezeichnet), Gemische aus 2,4'- und 4,4'-Diphenylmethan-diisocyanat, urethanmodifizierte flüssige 4,4'- und/oder 2,4-Diphenylmethan-diisocyanate, 4,4'-Diisocyanato-diphenylethan- (1,2) und 1,5-Naphthylen-diisocyanat.

Bevorzugt setzt man Isocyanate mit mindestens 3 Isocyanatgruppen enthaltend Urethoniminstrukturen auf der Basis MDI als (a1) ein.

Die Umsetzung in dem Verfahren zur Herstellung von TPU kann nach bekannten Verfahren, beispielsweise dem one-shot-Verfahren oder dem Prepolymerverfahren, beispielsweise durch Umsetzung eines NCO-haltigen Prepolymers, das aus (a) und Teilen der Komponenten (b) und gegebenenfalls (c) hergestellt werden kann, mit dem restlichen (b) und gegebenenfalls (c), auf einer üblichen Bandanlage, mit einem bekannten Reaktionsextruder oder für diesen Zweck bekannten Anlagen erfolgen. Die Temperatur bei dieser Umsetzung beträgt üblicherweise 60 bis 250°C, bevorzugt 60 bis 180°C, besonders bevorzugt 70 bis 120°C. Die Komponenten (a), (b) und gegebenenfalls (c) werden bevorzugt derart eingesetzt, daß das Verhältnis der Isocyanat- (NCO-) Gruppen zur Summe aller mit den NCO-Gruppen reagierenden Wasserstoffatome der Komponenten (b) und gegebenenfalls (c) 1 : 0,9 bis 1 : 1,2, besonders bevorzugt 1 : 0,95 bis 1 : 1,05, insbesondere 1 : 1 beträgt.

Während und gegebenenfalls nach der Bildung der Urethangruppen durch Umsetzung von (a) mit (b) und gegebenenfalls (c) können die Umsetzungsprodukte pelletiert, granuliert und/oder nach allgemein bekannten Verfahren, beispielsweise durch Extrusion in bekannten Extrudern, durch Spritzguß in üblichen Spritzgußmaschinen oder durch allgemein bekannte Spinnverfahren, beispielsweise durch Schmelzverspinnen, zu Formkörpern aller Art, Folien oder, im Falle der Spinnverfahren, zu Fasern verarbeitet werden.

Bevorzugt wird man das Reaktionsgemisch während und gegebenenfalls nach der Bildung der Urethangruppen durch Umsetzung von (a) mit (b) und gegebenenfalls (c) auf Extrudern oder Spritzgußmaschinen zu Folien oder Formkörpern oder im Spinnverfahren zu Fasern verarbeitet.

Bevorzugt kann man derart arbeiten, daß man die Reaktionsmischung in erweichtem oder geschmolzenem Zustand während der Umsetzung von (a) mit (b) und gegebenenfalls (c) oder nach der Umsetzung und nach der Granulierung des Umsetzungsproduktes bei einer Temperatur von 60 bis 230 °C im Spinnverfahren zu Fasern verarbeitet.

Bevorzugt kann man das Verfahrensprodukt nach dem Spinnverfahren bei einer Temperatur von 20 bis 120 °C, bevorzugt 80 bis 120°C für eine Zeitdauer von mindestens 2 Stunden, bevorzugt 12 bis 72 Stunden unter ansonsten üblichen Bedingungen tempern. Durch diese anschließende Temperung der Formkörper, Folien oder Fasern können zusätzlich, verbesserte, vorteilhafte Eigenschaften der Fasern in Bezug auf die Temperaturstabilität, den Druckverformungsrest und das Hystereseverhalten erreicht werden.

Werden ungesättigte Komponenten (b) und/oder (c) eingesetzt, beispielsweise cis-1,4-Butendiol, so können die Formkörper, Folien oder Fasern nach der Herstellung durch Bestrahlung, beispielsweise durch Elektronenbestrahlung behandelt werden.

Im Folgenden sollen die Komponenten (a) bis (e) beispielhaft dargestellt werden. Die im Folgenden angegebenen Molekulargewichte weisen, soweit nicht genannt, die Einheit g/mol auf.
a) Als organische Isocyanate (a) kommen die eingangs beschriebenen Isocyanate (a1), (a2) und/oder (a3) in Frage, wobei zusätzlich weitere Isocyanate, die andere, allgemein bekannte Modifikationen ausweisen können, eingesetzt werden können.
b) Als gegenüber Isocyanaten reaktive Substanzen (b) mit einer mittleren Funktionalität, d.h. einer über die Komponente (b) gemittelten Funktionalität von 1,8 bis 2,5, vorzugsweise 1,9 bis 2,2, besonders bevorzugt 1,95 bis 2,1, eignen sich beispielsweise Polyhydroxylverbindungen mit Molekulargewichten von 500 bis 8000, vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die genannten Polyhydroxylverbindungen können als Einzelkomponenten oder in Form von Mischungen zur Anwendung kommen.
   Die Mischungen zur Herstellung der TPU bzw. die TPU sollten zumindest überwiegend auf difunktionellen gegenüber Isocyanaten reaktiven Substanzen basieren.
   Des weiteren können als gegenüber Isocyanaten reaktive Substanzen (b) auch Polyamine, beispielsweise Amin-terminierte Polyether, z.B. die unter dem Namen Jeffamine® (Texaco Chemical Co.) bekannten Verbindungen eingesetzt werden, wobei die mittlere Funktionalität der Komponente (b) in dem erfindungsgemäßen Bereich liegen sollte.
   Die im Falle der TPU im wesentlichen linearen Polyetherole besitzen üblicherweise Molekulargewichte von 500 bis 8000, vorzugsweise 600 bis 6000 und insbesondere 800 bis 3500. Sie können sowohl einzeln als auch in Form von Mischungen untereinander zur Anwendung kommen.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierte ω-Caprolactone.
   Als Polyesterole vorzugsweise verwendet werden Alkandiolpolyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol- 1,4-butandiol-polyadipate.
   Die Polyesterole besitzen üblicherweise Molekulargewichte (Gewichtsmittel) von 500 bis 6000, vorzugsweise von 800 bis 3500.
c) Als Kettenverlängerungsmittel (c), die üblicherweise Molekulargewichte von kleiner 500 g/mol, bevorzugt 60 bis 499, besonders bevorzugt 60 bis 300 aufweisen, kommen vorzugsweise Alkandiole und/oder Alkendiole und/oder Alkindiole mit 2 bis 12 Kohlenstoffatomen, vorzugsweise mit 2, 3, oder 6 Kohlenstoffatomen, wie z.B. Ethandiol, Propan-1,2- und/oder -1,3-diol, Hexandiol-1,6, und insbesondere Butandiol-1,4 und/oder cis- und/oder trans-1,4-Butendiol und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4 und Hydroxyalkylenether des Hydrochinons, wie z.B. 1,4-Di-(β-hydroxyethyl)-hydrochinon.
   Gegebenenfalls kann es von Vorteil sein, geringe Mengen, d.h. bis zu 15 Gew.-% der Menge der eingesetzten Kettenverlängerer, an trifunktionellen Verbindungen, beispielsweise Glycerin, Trimethylolpropan und/oder 1,2,6-Hexantriol einzusetzen.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 6,4, wobei die Härte und der Schmelzpunkt der TPU mit zunehmendem Gehalt an Diolen ansteigt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche, sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (b) eingesetzt.
e) Neben Katalysatoren können den Aufbaukomponenten (a) bis (c) auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, Farbstoffe, anorganische und/oder organische Füllstoffe, Verstärkungsmittel und/oder Weichmacher.
   Nähere Angaben über die oben genannten Hilfsmittel- und Zusatzstoffe sind der Fachliteratur zu entnehmen.

Die erfindungsgemäß erhältlichen thermoplastischen Polyurethan-Fasern, enthaltend Urethoniminstrukturen, weisen deutliche Verbesserungen in der Temperaturstabilität, Druckverformungsreste und im Hystereseverhalten auf und können zudem in einem Spinnprozeß verarbeitet werden, ohne daß vermehrt Fadenbrüche auftreten.

Das erfindungsgemäße Verfahren soll anhand der folgenden Beispiele näher erläutert werden. In der Tabelle sind die Rezepturen zum Vergleichsbeispiel 1 sowie zu den erfindungsgemäßen Beispielen 2 und 3 angegeben.

### Herstellungsverfahren

Die Mischung der entsprechenden Mengen aus Polyol und Butandiol wurde auf eine Temperatur von 80 °C gebracht und anschließend mit der Mischung (40°C vortemperiert) aus den entsprechenden Mengen MDI und MDI-Urethonimin unter schnellem Rühren und Viskositätsanstieg versetzt. Der Gesamtansatz betrug jeweils ca. 2000 g Reaktionsmischung. Durch die Reaktionswärme stieg die Temperatur der Reaktionsmischung an. Bei einer Temperatur von 110°C wurde die Reaktionsmasse in eine Teflonschale zu einer Schwarte ausgegossen und die Reaktion nach ca. 10 min Aushärtung bei 70°C im Temperofen für 20 Stunden vervollständigt. Nach Granulierung und Trocknung des Granulates konnte das Material thermoplastisch verarbeitet werden.

Unter MDI-Urethonimin ist hierbei eine kommerziell erhältliche Mischung aus dem monomeren MDI (a2), dem Carbodiimid des MDI (a3) und des eigentlichen, höherfunktionellen Urethonimin des MDI (a1) verschiedener Polymerisationsgrade x (s. Formel I) zu verstehen.

Nachfolgende Tabelle zeigt die Vorteile der aufgeführten Beispiele 2 und 3 im Vergleich zum Vergleichsbeispiel 1.

| Beispiel | 1 | 2 | 3 |
|---|---|---|---|
| Rezeptur: | | | |
| Polyol [Gew.-Teile] | 1300 | 1300 | 1300 |
| Butan-1,4-diol [Gew.-Teile] | 137,9 | 137,9 | 137,9 |
| MDI [Gew.-Teile] | 549,1 | 504,4 | 457,8 |
| MDI-Urethonimin ^{**1)**} [Gew.-Teile] | 0 | 56 | 114,4 |
| Prüfung an Spritzgußkörpern: | | | |
| Härte DIN 53505 [Shore A] | 84 | 84 | 84 |
| AR DIN 53516 [mm³] | 38 | 37 | 41 |
| DVR 23°C DIN 53517 [%] | 22 | 20 | 15 |
| DVR 70°C DIN 53517 [%] | 36 | 31 | 27 |
| WR DIN 53515 [N/mm] | 76 | 67 | 59 |
| ZF DIN 53504 [N/mm²] | 38 | 44 | 45 |
| BD DIN 53504 [%] | 550 | 500 | 470 |
| Vicat nach DIN 53460 [°C] | 113 | 124 | 130 |
| Prüfung an Monofilen ^{**2)**} : | | | |
| Restdehnung in d. Hysterese Zyklus 1 DIN 53835 [%] | 32 | 28 | 27 |
| Restdehnung in d. Hysterese (DIN 53835) Zyklus 2 DIN 53835 [%] | 43 | 37 | 36 |
| | | | |
| Lösungsviskosität [mPas] | 77 | 115 | 138 |
| Beispiel 1: Vergleichsbeispiel | | | |

| | | | |
|---|---|---|---|
| ^{**1)**}: MDI-Urethonimin = Mischung aus monomer MDI, MDI-Carbodiimid und höherfunktionellem Urethonimin des MDI verschiedener Polymertisationsgrade; die Gesamtfunktionalität betrug 2,2 | | | |
| ^{**2)**}:Material thermoplastisch verarbeitet im Schmelzspinnprozeß - Polyol:: Polyesterdiol mit einem Molekulargewicht von 2000 auf der Basis Butan-1,4-diol, Hexan-1,6-diol und Adipinsäure - AR:: Abrieb - DVR:: Druckverformungsrest - WR:: Weiterreißfestigkeit - ZF:: Zugfestigkeit - BD:: Bruchdehnung - Lösungsviskosität:: rel. Lösungsviskosität in DMF/Diamin-Lösung; gemessen gegen reines Lösungsmittel | | | |

Die Tabelle verdeutlicht den Vorteil durch Zusatz von höher funktionellem MDI-Urethonimin in den Eigenschaften Druckverformungsrest bei 23°C und 70°C, sowie der Temperaturstabilität (Vicat-Temperatur) und den Restdehnungen (Rückstellverhalten) bzw. Hystereseeigenschaften gemessen an schmelzgesponnenen Elastomerfasern.

## Patentansprüche

1. Verfahren zur Herstellung von thermoplastischen Polyurethan-Fasern durch Umsetzung von (a) Isocyanaten mit (b) gegenüber Isocyanaten reaktiven Verbindungen mit einer mittleren Funktionalität von 1,8 bis 2,5 und einem Molekulargewicht von 500 bis 8000 g/mol und gegebenenfalls (c) Kettenverlängerungsmitteln mit einem Molekulargewicht von kleiner 500 g/mol, (d) Katalysatoren und/oder (e) üblichen Hilfsund/oder Zusatzstoffen, **dadurch gekennzeichnet, daß** man mindestens 3 funktionelle Isocyanate (a1) enthaltend Urethoniminstrukturen einsetzt und die Reaktionsmischung in erweichtem oder geschmolzenem Zustand während der Umsetzung von (a) mit (b) und gegebenenfalls (c) oder nach der Umsetzung und nach der Granulierung des Umsetzungsproduktes bei einer Temperatur von 60 bis 230°C im Spinnverfahren zu Fasern verarbeitet.

2. Verfahren nach Anspruch 1, **dadurch gekennzeichnet, daß** (al) 3 bis 6 Isocyanatgruppen aufweist.

3. Verfahren nach Anspruch 1, **dadurch gekennzeichnet, daß** Isocyanate mit mindestens 3 Isocyanatgruppen enthaltend Urethoniminstrukturen auf der Basis MDI als (a1) einsetzt.

4. Verfahren nach Anspruch 1, **dadurch gekennzeichnet, daß** man zusätzlich zu (a1) difunktionelle Isocyanate (a2) und/oder Carbodiimide (a3) einsetzt.

5. Verfahren nach Anspruch 4, **dadurch gekennzeichnet, daß** man (a1), (a2) und (a3) in solchen Verhältnissen zueinander einsetzt, daß die Gesamtfunktionalität der Isocyanate in der Mischung 2,01 bis 5 beträgt.

6. Fasern erhältlich durch ein Verfahren gemäß einem der Ansprüche 1 bis 5.

7. Fasern enthaltend Urethoniminstrukturen erhältlich durch ein Verfahren gemäß einem der Ansprüche 1 bis 5.

## Claims

1. A process for producing thermoplastic polyurethane fibers by reacting (a) isocyanates with (b) compounds reactive to isocyanates and having an average functionality of from 1.8 to 2.5 and a molar mass of from 500 to 8000 g/mol, and, if desired, (c) chain extenders having a molar mass of less than 500 g/mol, (d) catalysts and/or (e) conventional auxiliaries and/or additives, which comprises using isocyanates (a1) which are at least trifunctional and contain urethonimine structures and processing the reaction mixture in a softened or molten state during the reaction of (a) with (b) and, if desired, (c) or after the reaction and after pelletizing the reaction product, at from 60 to 230°C, by spinning, to give fibers.

2. A process as claimed in claim 1, wherein (a1) has from 3 to 6 isocyanate groups.

3. A process as claimed in claim 1, wherein isocyanates having at least 3 isocyanate groups and containing urethonimine structures and based on MDI are used as (a1).

4. A process as claimed in claim 1, wherein bifunctional isocyanates (a2) and/or carbodiimides (a3) are used in addition to (a1).

5. A process as claimed in claim 4, wherein the ratios in which (a1), (a2) and (a3) are used in relation to one another give an overall functionality of from 2.01 to 5 for the isocyanates in the mixture.

6. A fiber obtainable by a process as claimed in any one of claims 1 to 5.

7. A fiber containing urethonimine structures obtainable by a process as claimed in any one of claims 1 to 5.

## Revendications

1. Procédé de préparation de fibres thermoplastiques de polyuréthane par réaction d'isocyanates (a) avec des composés (b) réactifs envers les isocyanates ayant une fonctionnalité moyenne de 1,8 à 2,5 et une masse moléculaire de 500 à 8 000 g/mole et éventuellement des agents extenseurs de chaînes (c) ayant une masse moléculaire inférieure à 500 g/mole, et des catalyseurs (d) et/ou des adjuvants et/ou additifs (e), **caractérisé en ce que** l'on met en oeuvre des structures uréthonimine contenant au moins 3 groupes fonctionnels isocyanate (a1) et le mélange réactionnel est transformé à l'état ramolli ou fondu en fibres, pendant la réaction de (a) avec (b) et éventuellement (c) ou bien après la réaction et après la granulation du produit de réaction à une température de 60 à 230°C dans le procédé de filage.

2. Procédé selon la revendication 1, **caractérisé en ce que** (a1) présente 3 à 6 groupes isocyanate.

3. Procédé selon la revendication 1, **caractérisé en ce qu'**il met en oeuvre des isocyanates avec des structures uréthonimine contenant au moins 3 groupes isocyanate à base de MDI en tant que (a1).

4. Procédé selon la revendication 1, **caractérisé en ce que** l'on met en oeuvre en plus de (a1), des isocyanates difonctionnels (a2) et ou des carbodiimides (a3)

5. Procédé selon la revendication 4, **caractérisé en ce que** l'on met en oeuvre (a1), (a2) et (a3) dans des rapports mutuels tels que la fonctionnalité totale des isocyanates est de 2,01 à 5 dans le mélange.

6. Fibres pouvant être obtenues au moyen d'un procédé selon l'une quelconque des revendications 1 à 5.

7. Fibres contenant des structures uréthonimine pouvant être obtenues au moyen d'un procédé selon l'une quelconque des revendications 1 à 5.
